# EUROPEAN PATENT APPLICATION

(11) **EP 1 724 473 A2**
(43) Date of publication of application: **22.11.2006**
(21) Application number: 06113189.2
(22) Date of filing: 27.04.2006
(51) Int. Cl.: F16B 31/02

(54) **Treaded bolt with a break-off points shank**

(30) Priority: 16.05.2005 FI 20055228
(71) Applicant: Ensto Sekko Oy, 06100 Porvoo (FI)
(72) Inventor: Kario, Peter, 06100 Porvoo (FI); Pekkinen, Jaakko, 07700 Koskenkylä (FI)
(74) Representative: LEITZINGER OY

(57) **Abstract**

The object of the present invention is a bolt (1) with a breakable shank comprising a head portion (2), a shank (3) connected to the head portion, the shank comprising a threaded element (4), which can be fastened to a threaded hole (21) in a base (20) and which shank is divided into several successive threaded parts (4a, 4b, 4c). Each of the successive threaded parts (4a, 4b, 4c) is separated from the others by a break-off point (5a, 5b, 5c). The bolt (1) comprises a torsion bush (10), the outer surface (11) of which is designed to be gripped by a wrench. Within the area of the head portion (2) of the bolt (1) and of at least one threaded part (4c, 4b) is a gripping formation (6) and on the inner surface (12) of the torsion bush (10) are counter-formations (13) to the gripping formations (6) for shifting the torque from the torsion bush (10) to the bolt (1) in the vicinity of the surface (20a) of the base (20). When the bolt (1) is turned via the torsion bush (10), the torsion bush (10) is arranged to move in the direction of the longitudinal axis (L) of the bolt (1) with respect to the bolt (1) to maintain the point of action of the torque in the vicinity of the base (20) surface (20a).

## Description

The present invention relates to a bolt with a breakable shank comprising a head portion, a shank connected to the head portion, the shank comprising a threaded element, which can be fastened to a threaded hole in a base and which shank is divided into several successive threaded parts, each of the successive threaded parts being separated from one another by a break-off point.

Such breakable bolts are previously known, for example, from the patent publications EP 0819222 and EP 0984176. Publication EP 0819222 discloses a breakable bolt which is screwed into a threaded hole made in a base by screwing it with a conventional socket wrench fitting around the head portion. Publication EP 0984176, on the other hand, discloses a breakable bolt which is screwed into place through the head portion by means of a conventional hexagon wrench pushed axially inside the bolt. The publications further disclose bolt portions separated from each other by means of weakened sections with differing torsional strengths.

The purpose of the weakened sections of differing torsional strengths is to make the bolt break at a particular weakened section corresponding to a particular torque. Despite this, a problem with the bolts disclosed in these publications is how to ensure that they break at exactly the desired point, because by means of wrenches (socket wrench, hexagon wrench), the point of action of the torque in the axial direction of the bolt cannot be accurately directed at the moment preceding the breaking of the bolt.

The object of the present invention is to eliminate, or at least substantially reduce the above-mentioned disadvantages.

To eliminate the above disadvantage, the present invention is characterised in that the bolt comprises a torsion bush, the outer surface of which is designed to be gripped by a wrench, that within the area of the bolt head and of at least one threaded part is a gripping formation, that on the inner surface of the torsion bush are counter-formations to the gripping formations for shifting the torque from the torsion bush to the bolt in the vicinity of the surface of the base, and that when turning the bolt via the torsion bush, the torsion bush is arranged to move in the direction of the longitudinal axis of the bolt with respect to the bolt to maintain the point of action of the torque in the vicinity of the base surface.

Preferred embodiments of the present invention are disclosed in the dependent claims.

The invention is described in greater detail in the following with reference to the drawings relating to an embodiment, of which drawings:
- Figure 1: shows a side view of the bolt according to the invention to be fastened in the threaded hole and of the torsion bush,
- Figure 2: shows a top view of the torsion bush according to the invention,
- Figure 3a: shows a cross-section of the initial stage of fastening the bolt according to the invention,
- Figure 3b: shows a cross-section of the final stage of fastening the bolt according to the invention before the breaking of the bolt, and
- Figure 3c: shows a cross-section of the final stage of fastening the bolt according to the invention after the breaking of the bolt.

The Figures thus show a bolt with a breakable shank according to the invention, which is referred to by reference numeral 1. The bolt 1 comprises a head portion 2 and a shank 3 joined by its first end to the head portion 2. The second end of the shank 3 extends to some distance from the head portion 2. The shank 3 includes a threaded element 4 by means of which the bolt 1 is fastened to the threaded hole 21 in the base 20. The base 20 is, for example, a coupling intended for extending an electric cable or for joining cables. The above-mentioned threaded hole 21 is made in the wall of the coupling 20.

The threaded element 4 is divided into several threaded sections in the direction of the longitudinal axis L of the bolt 1, in the example case into three threaded sections 4a, 4b, 4c. Each successive threaded part is separated from the others by break-off points 5a, 5b. A break-off point is preferably formed in the shank parts remaining between the threaded parts. In addition, in the shank portion 3 between the head portion 2 and the nearest bolt portion 4c, in the vicinity of the bolt portion 4c, is formed a break-off point 5c. The number of threaded parts may obviously deviate from three, where necessary. Typically, there are 2 to 10 threaded parts.

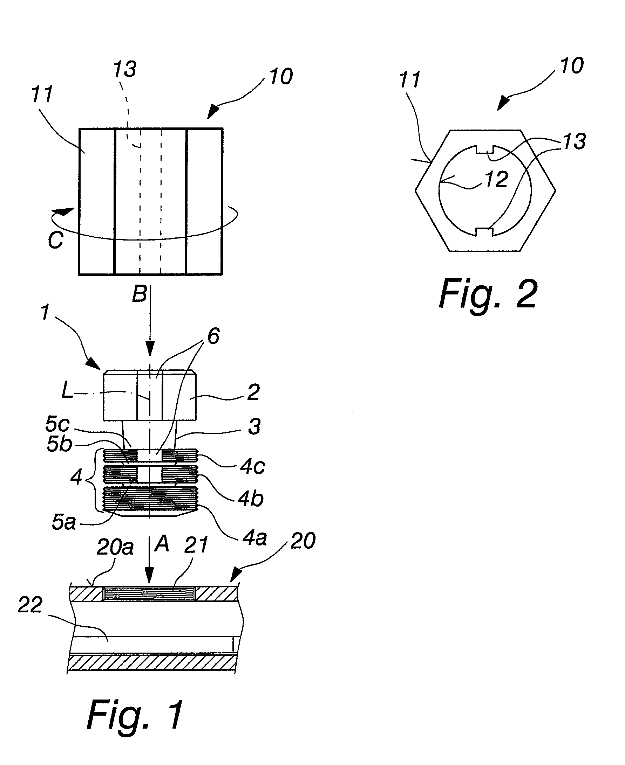

The break-off points 5a, 5b and 5c are shorter in radial distance than the threaded parts 4a, 4b, 4c. The torsional strength of the break-off points 5a, 5b and 5c is determined essentially by this radial distance. All break-off points preferably have the same torsional strength. The break-off points may have different torsional strengths, for example, torsional strength diminishing towards the head. Furthermore, each threaded part may be made different in length in the longitudinal direction L of the bolt. As shown in Figure 1, the threaded part 4a within the area of the point of the shank 3 is longest in the direction of the longitudinal axis L of the bolt 1, and the threaded part 4c in the vicinity of the first end of the shank 3 is shortest.

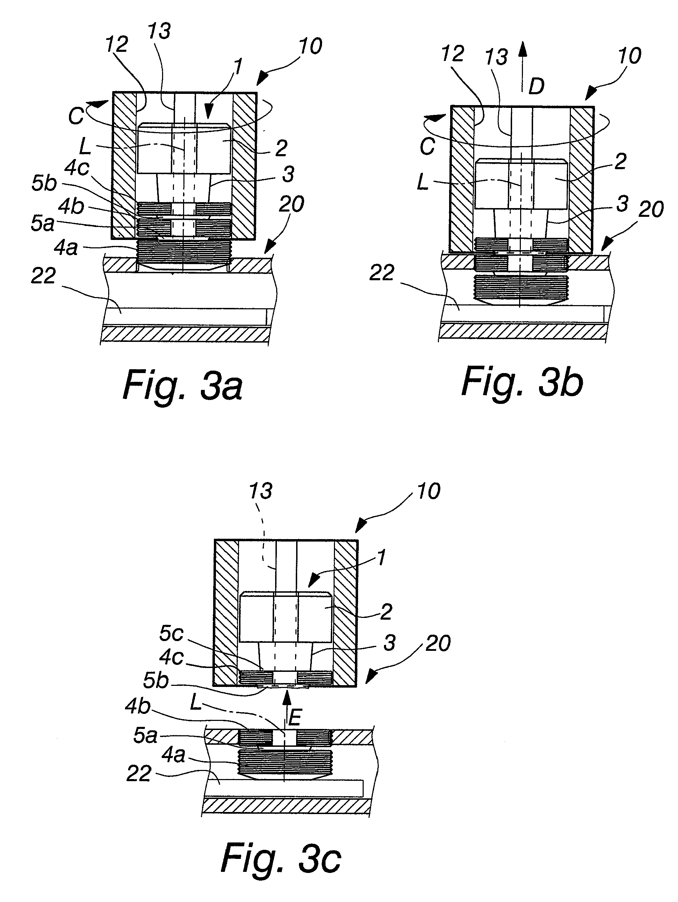

The bolt 1 is taken in the direction of arrow A shown in Figure 1 into the threaded hole 21 in the base 20 and screwed tight with a wrench 10. For this purpose, within the area of the bolt head and of at least one threaded part, in the case of Figure 1 two threaded parts, is formed a gripping formation 6. In this case, the gripping formation 6 consists of two longitudinal grooves 6 in the bolt 1 that are opposite in the radial direction of the bolt and formed in conjunction with the head and the threaded parts 4c, 4b. In this case, there are counter-formations 13 for the gripping formations 6 on the inner surface of the torsion bush 10. The counter-formations are in this case the longitudinal flanges 13 of the bush 10 formed on opposite sides of the inner surface 12 which is circular in cross-section. The torsion bush 10 is thus slidable in the direction of arrow B shown in Figure 1 by a distance corresponding to groove 6 around the bolt 1, as shown in Figure 3a. The outer surface 11 of the torsion bush 10 is preferably made hexagonal in cross-section, whereby the bush 10, and thus the bolt 1, may be turned by means of an ordinary tool in the direction of arrow C of Figure 3a into the threaded hole 21 in the base.

The functioning of the said bolt 1 and torsion bush 10 are described in greater detail in the following, with reference to the accompanying Figures 3a, 3b and 3c. Figure 3a shows the initial stage of fastening the bolt 1 to the base 20, where the bush 10 has been taken by the above-described distance around the bolt 1. When the torsion bush 10 is turned around the pivotal axis L of the bolt 1, the bolt becomes fastened against the electric cable 22, as shown in Figure 3b. From Figures 3a and 3b can be seen that as the bolt portion 4a moves below the outer surface 20a of the base 20, the bush 10 begins to move with respect to the bolt 1. The gripping formation 13 of the torsion bush 10 then provides the bolt 1 with a torque, the point of action of which is in the vicinity of the surface 20a of the base 20. Thus, once the bolts 1 have been screwed deep enough, in this case to keep the electric cable 22 in place, the torque required to tighten the bolt begins to increase. Once the bolt has been tightened to the position shown in Figure 3b, where the bolt portion 4b is below the surface 20a of the base 20, the torque of the torsion bush 10 acts only on the break-off point 5b and on the threaded part 4c. By this stage, the torque has become so high that the bolt 1 breaks at the break-off point 5b as shown in Figure 3c. The bolt 1 will definitely break at this point, because due to the joint action of the flanges 13 of the torsion bush 10 and the bolt grooves 6 the point of action of the torque will always remain in the vicinity of the surface 20a of the base 20.

Thus, by means of the bolt with a breakable shank according to the present invention the torque can be directed at the bolt where it is supposed to be to ensure correct breakage of the bolt. As an advantage may be mentioned the fact that the bolts can be manufactured in such a way that the break-off points have the same torsional strengths. This torsional strength may be selected so as to be optimal for each application.

## Claims

1. A bolt (1) with a breakable shank comprising a head portion (2), a shank (3) connected to the head portion, the shank comprising a threaded element (4), which can be fastened to a threaded hole (21) in a base (20) and which shank is divided into several successive threaded parts (4a, 4b, 4c), each of the successive threaded parts (4a, 4b, 4c) being separated from the others by a break-off point (5a, 5b, 5c), **characterised in that** the bolt (1) comprises a torsion bush (10), the outer surface (11) of which is designed to be gripped by a wrench, that within the area of the head portion (2) of the bolt (1) and of at least one threaded part (4c, 4b) is a gripping formation (6), that on the inner surface (12) of the torsion bush (10) are counter-formations (13) to the gripping formations (6) for shifting the torque from the torsion bush (10) to the bolt (1) in the vicinity of the surface (20a) of the base (20), and that when turning the bolt (1) via the torsion bush (10), the torsion bush (10) is arranged to move in the direction of the longitudinal axis (L) of the bolt (1) with respect to the bolt (1) to maintain the point of action of the torque in the vicinity of the base (20) surface (20a).

2. A bolt as claimed in claim 1, **characterised in that** all break-off points (5a, 5b, 5c) have the same torsional strength or a torsional strength diminishing towards the base portion (2).

3. A bolt as claimed in claim 1 or 2, **characterised in that** the cross-section of the outer surface (11) of the torsion bush is hexagonal.

4. A bolt as claimed in any of the above claims 1 to 3, **characterised in that** the gripping formation (6) consists of one or more longitudinal grooves or slots of the bolt 1 extending within the area of the head (2) and of at least one threaded part (4c).
